# EUROPEAN PATENT APPLICATION

(11) **EP 4 756 602 A1**
(43) Date of publication of application: **10.06.2026**
(21) Application number: 25218815.6
(22) Date of filing: 26.11.2025
(51) Int. Cl.: G06F 3/12, G06F 9/4401

(54) **APPLICATION PROGRAM, METHOD, AND INFORMATION PROCESSING APPARATUS**

(30) Priority: 03.12.2024 JP 2024210520
(71) Applicant: Canon Kabushiki Kaisha, Tokyo, 146-8501 (JP)
(72) Inventor: ITO, Masaru, Tokyo, 146-8501 (JP)
(74) Representative: Canon Europe Limited

(57) **Abstract**

Control method wherein a printer driver is installed in an information processing apparatus including a registry and a print queue. The registry stores a driver object and a printer object. The driver object is information about a printer driver. The printer object includes identification information of the printer driver. The print queue corresponds to the printer object. The control method comprises: requesting acquisition of information about the driver object and the printer object; storing the driver object corresponding to the printer driver; when information about the driver object fails to be acquired in response to the acquisition request, storing, in the registry, a first printer object and creating a first print queue; and when information about a second printer object having the identification information of the printer driver is acquired in response to the acquisition request, deleting the second printer object and a corresponding second print queue.

## Description

### TECHNICAL FIELD

The present disclosure relates to an application program, a method, and an information processing apparatus.

### BACKGROUND

To use an image forming apparatus which has a printer, a scanner, and the like and which is connected to a computer, device drivers for controlling these devices typically need to be installed in the computer.

For example, when a printer is to be used, installation of a printer driver is necessary.

When a printer driver is installed in a computer, the program of the printer driver is stored in a predetermined storage device of the computer. In the registry, setting information of the installed printer driver is registered as a driver object.

In addition, information about a connection port of the printer, setting information of the driver associated with a print queue, and the like are registered as a printer object in the registry in the operating system (hereinafter referred to as OS) of the computer.

Recently, a technique has been disclosed which provides a secure environment in which the OS of a computer blocks the function of a printer driver, which is made and provided by the printer maker (expressed also as the vendor or the manufacturer), so that attackers fail to exploit OS vulnerabilities related to printing.

In contrast, application of the environment causes the driver object of the printer driver, which is made by the printer maker (and which has been registered in the OS), to be deleted from the registry, making the print queue, which is associated with the driver, unusable. Further, making the print queue unusable causes a print job to fail to be transmitted from the computer to an image forming apparatus.

The printer object or the driver object which is registered in the registry may be deleted due to a user's erroneous operation. In this case, information which associates the print queue with the printer driver is also deleted, making the print queue unusable.

There is a technique of the related art which, when the specification of an OS is changed, enables a printer driver, which is compatible with the changed specification of the OS, to be installed. For example, Japanese Patent Laid-Open No, 2017-27538 describes a technique which, even when the OS is updated to one in which only a printer driver with a specific architecture operates, enables a printer driver, which can operate on the updated OS, to be installed.

### SUMMARY

The present disclosure in its first aspect provides an application program (e.g., a computer implemented program) for causing an information processing apparatus to perform a control method. The program is configured to cause a printer driver (e.g., a given printer driver) to be installed in (i.e., on) the information processing apparatus. The information processing apparatus includes a registry and a print queue. The registry is configurable (e.g., the registry is configured when in use) to store a driver object and a printer object. The driver object includes information about a printer driver (e.g., the driver object may 'be' information about the print driver), and the printer object includes identification information of the printer driver. The print queue corresponds to (e.g., is associated with) the printer object. The control method comprises: requesting acquisition of information about the driver object and the printer object from the registry; storing the driver object corresponding to the printer driver, and, when information about the driver object fails to be acquired in response to the acquisition request, storing, in the registry, a first printer object including identification information of the printer driver, and creating a first print queue; and when information about a second printer object having the identification information of the printer driver is acquired in response to the acquisition request, deleting the second printer object and a second print queue corresponding to the second printer object.

The present disclosure in its second aspect provides a method (e.g., a control method) for an information processing apparatus. The information processing apparatus includes a registry and a print queue. The registry is configured to store a driver object and a printer object, the driver object including information about a printer driver, the printer object including identification information of the printer driver. The print queue corresponds to the printer object. The method comprises: requesting acquisition of information about the driver object and the printer object from the registry; storing the driver object corresponding to a printer driver, and, when information about the driver object fails to be acquired in response to the acquisition request, storing, in the registry, a first printer object including identification information of the printer driver, and creating a first print queue; and when information about a second printer object having the identification information of the printer driver is acquired in response to the acquisition request, deleting the second printer object and a second print queue corresponding to the second printer object.

The present disclosure in its third aspect provides an information processing apparatus including a registry and a print queue, the registry being configured to store a driver object and a printer object, the driver object including information about a printer driver, the printer object including identification information of the printer driver, and wherein the print queue corresponds to the printer object, the information processing apparatus comprising at least one processor operating to: request acquisition of information about the driver object and the printer object from the registry; store the driver object corresponding to a printer driver, and, when information about the driver object fails to be acquired in response to the acquisition request, store, in the registry, a first printer object including identification information of the printer driver, and create a first print queue; and when information about a second printer object having the identification information of the printer driver is acquired in response to the acquisition request, delete the second printer object and a second print queue corresponding to the second printer object.

Advantageously, the above aspects each provide a means by which a print queue, which is unusable due to deletion of the corresponding driver object, can be made usable again without degradation of user operability.

Optional features will not be set out which are applicable (individually or in any combination thereof) to each of the above aspects.

It will be appreciated that the identification information (i.e., included in the printer object) may be different to the information about the printer driver (i.e., included in the driver object).

Optionally, the driver object includes information about a storage destination of the printer driver.

Optionally, the identification information of the printer driver is a name of the printer driver.

Optionally, the control method further comprises causing the information processing apparatus to perform transferring of setting information of the second printer object to the first printer object.

Optionally, setting information of the second printer object includes at least one of information about a connection port of a printer corresponding to the second printer object, a name of the printer driver, and print setting information.

Optionally, the control method further comprises causing the information processing apparatus to acquire a connection state of the second print queue.

Optionally, the control method further comprises, when the connection state of the second print queue acquired in the acquiring a connection state indicates an error, causing the information processing apparatus to perform the creating and the deleting.

Optionally, the acquiring of a connection state detects a connection error when an instruction to transmit a print job from the second print queue to a printer compatible with the printer driver is received.

Optionally, the acquiring of a connection state acquires the connection state through polling at regular intervals.

Optionally, the program is a driver installer which installs the printer driver.

Optionally, the program causes a storage destination of the printer driver to be specified by using the identification information of the printer driver.

Optionally, the program causes the printer driver to be installed using the storage destination of the printer driver.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating an entire configuration example of a system according to an embodiment of the disclosure of the subject application.
Fig. 2 is a diagram illustrating a hardware configuration example of a personal computer (PC) according to an embodiment of the disclosure of the subject application.
Fig. 3 is a diagram illustrating an information example stored in an auxiliary storage device of a PC according to the present embodiment.
Fig. 4 is a diagram illustrating a hardware configuration example of an image forming apparatus according to an embodiment of the disclosure of the subject application.
Figs. 5A and 5B are diagrams illustrating a registry information example.
Figs. 6A to 6C are diagrams illustrating a user interface (UI) example displayed for print setting of a drawing application.
Fig. 7 is a diagram illustrating the sequence of the entire process of the present system according to a first embodiment of the disclosure of the subject application.
Fig. 8 is a diagram illustrating a UI example displayed on an installer according to the first embodiment of the disclosure of the subject application.
Fig. 9 is a flowchart of a process of an installer according to the first embodiment of the disclosure of the subject application.
Fig. 10 is a diagram illustrating the sequence of the entire process of the present system according to a second embodiment of the disclosure of the subject application.
Fig. 11 is a flowchart of a process of a resident application according to the second embodiment of the disclosure of the subject application.

### DESCRIPTION OF THE EMBODIMENTS

Embodiments will be described below in detail by referring to the attached drawings. The embodiments below do not limit the disclosure related to the scope of the claims. Not all of multiple features, which are described in the embodiments, are necessary in the disclosure. In addition, any of the features may be combined with one another. Further, in the attached drawings, the same or similar configurations are designated with the same reference numerals, and repeated description will be avoided.

### System Configuration

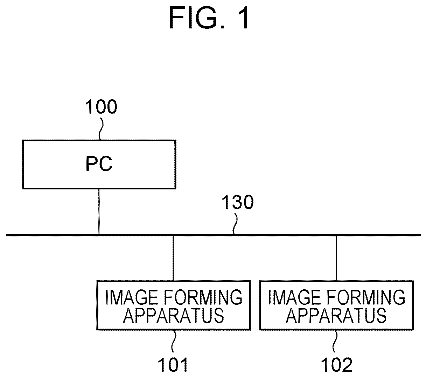

Fig. 1 is a diagram illustrating a configuration example of a system to which an embodiment of the present disclosure is applicable. A personal computer (PC) 100, which is an information processing apparatus, and multiple image forming apparatuses (101, 102) are connected to one another through a network 130. It is assumed that printing is performed from the PC 100, which is used by a user, through the network 130 by using an image forming apparatus (101, 102). The number of the PC 100 and the image forming apparatuses (101, 102) is not limited to that illustrated in Fig. 1.

### Hardware Configuration of Information Processing Apparatus

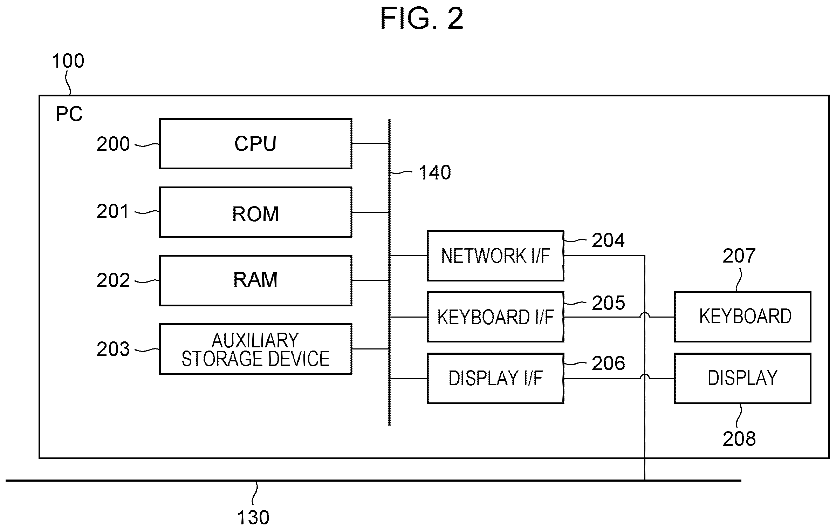

Fig. 2 is a diagram illustrating a hardware configuration example of the PC 100 which is illustrated in Fig. 1 and which serves as an information processing apparatus in an image forming system according to the present embodiment.

A central processing unit (CPU) 200 overall controls access to various devices on the basis of control programs stored in a read-only memory (ROM) 201 or an auxiliary storage device 203.

The ROM 201 stores, for example, control programs executable by the CPU 200.

A random-access memory (RAM) 202 mainly functions, for example, as main memory and a work area of the CPU 200, and may be configured to allow expansion of the storage capacity with an optional RAM connected to an expansion port (not illustrated).

The auxiliary storage device 203 is formed, for example, of a hard disk drive (HDD) or a solid state drive (SSD).

A network interface (I/F) 204 is an interface for data communication with external devices through the network 130.

A keyboard I/F 205 is an interface for control of key input from a keyboard 207 and a pointing device (not illustrated).

A display I/F 206 is an interface for control of display on a display 208.

A system bus 140 is a bus for causing the components in the PC 100 to be communicatively connected to one another.

### Configuration of Information Used in Information Processing Apparatus

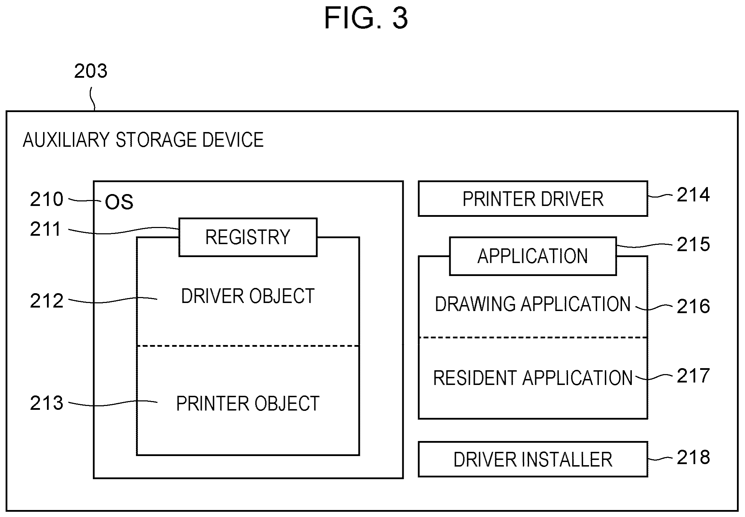

Fig. 3 is a diagram schematically illustrating the configuration of information stored in the auxiliary storage device 203 of the PC 100 according to the present embodiment. The auxiliary storage device 203 stores, for example, an operating system (OS) 210, printer drivers 214, applications 215, and a driver installer 218. The OS 210 is software which controls basic operations of the PC 100.

A printer driver 214 is a predetermined printer driver compatible with an image forming apparatus which a user wants to use. When a user instructs the PC 100 to install the printer driver 214, the driver installer 218 transmits an instruction to start installation of the printer driver 214. After that, an application program interface (API) of the OS 210 is invoked, and the printer driver 214 is installed in the OS 210.

The driver installer 218 is a program for installing a printer driver 214. When the driver installer 218 performs the installation, a package of the printer driver 214 is stored in a predetermined folder created in a driver store.

The driver store is a folder for storing packages of the printer drivers 214 managed by the OS 210. The created predetermined folder is disposed in the driver store with a name corresponding to the installed printer driver 214.

A registry 211 stores driver objects 212, which are information about the printer drivers 214, and printer objects 213. Each driver object 212 includes setting information of the corresponding printer driver 214, and includes information for accessing the predetermined folder which is created in the driver store and which is the storage destination of the printer driver 214. Each printer object 213 includes, for example, setting information about a connection port of the corresponding printer, and includes the name, setting information, and the like of the corresponding printer driver 214 associated with a print queue.

The print queue is an icon displayed, for example, on a control panel of the OS 210 or a print setting screen of a drawing application 216, as an option of a transmission destination of a print job.

A printer object 213 may be regarded as object information of the corresponding print queue.

In the process of installing a printer driver 214, a driver object 212 and a printer object 213 are registered in the registry 211. The printer object 213 stored in the registry has identification information of the printer driver 214 corresponding to the driver object 212. Thus, when the print queue corresponding to the printer object 213 is selected, printing using the printer driver 214 may be performed.

Examples of the drawing application 216 include an application, which performs document preparation, tabular calculation, or the like, a web browser, and a photo application.

A resident application 217 is an application which starts at the same time when the OS 210 of the PC 100 starts and which monitors, for example, the connection states or the like of printers by polling at regular time intervals.

### Configuration of Image Forming Apparatus in Image Forming System

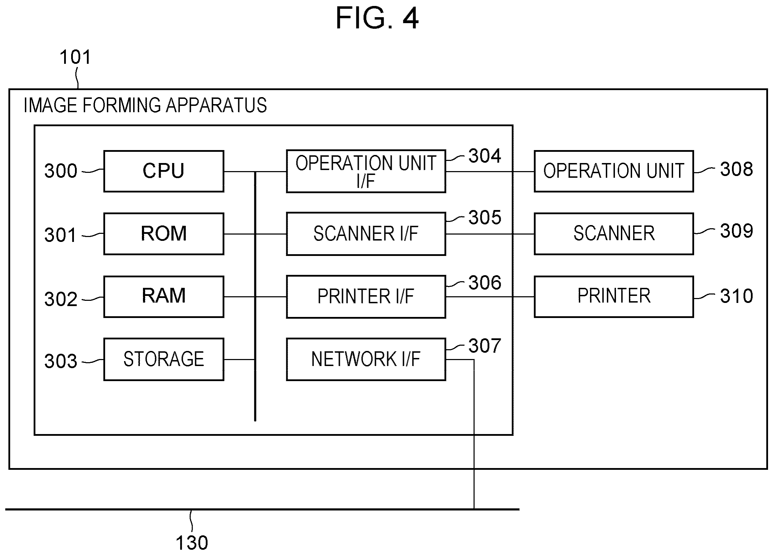

Fig. 4 is a diagram illustrating a configuration example of an image forming apparatus in the image forming system according to the present embodiment. A description will be made by taking the image forming apparatus 101 as an example. In the present embodiment, a description will be made under the assumption that each image forming apparatus (101, 102) has, for example, a different print function. In accordance with its function, each image forming apparatus (101, 102) may have different components or different detailed configurations.

A CPU 300 overall controls access to various devices on the basis of control programs stored in a ROM 301 or a storage 303. The ROM 301, which is a nonvolatile storage area, stores, for example, control programs executable by the CPU 300.

A RAM 302 mainly functions, for example, as main memory and a work area of the CPU 300, and may be configured to allow expansion of the storage capacity with an optional RAM connected to an expansion port (not illustrated).

The storage 303 stores print data, image data, various programs, and various types of setting information. A scanner 309 is a reading unit which reads a document and generates a read image. A printer 310 is a print unit which performs a print operation on the basis of given image data.

An operation unit 308 receives input from a user through a user interface (UI), and displays a UI. A network I/F 307 is an interface for data communication with external devices through the network 130. Each of the operation unit 308, the scanner 309 and the printer 310 communicates with all of the CPU 300, the ROM 301, the RAM 302 and the storage 303 via a corresponding I/F.

Thus, the hardware, such as the CPU 300, the ROM 301, the RAM 302, and the storage 303, forms a so-called computer.

### Method of Storing Driver Object and Printer Object in Registry and Display Example of Print Setting Screen

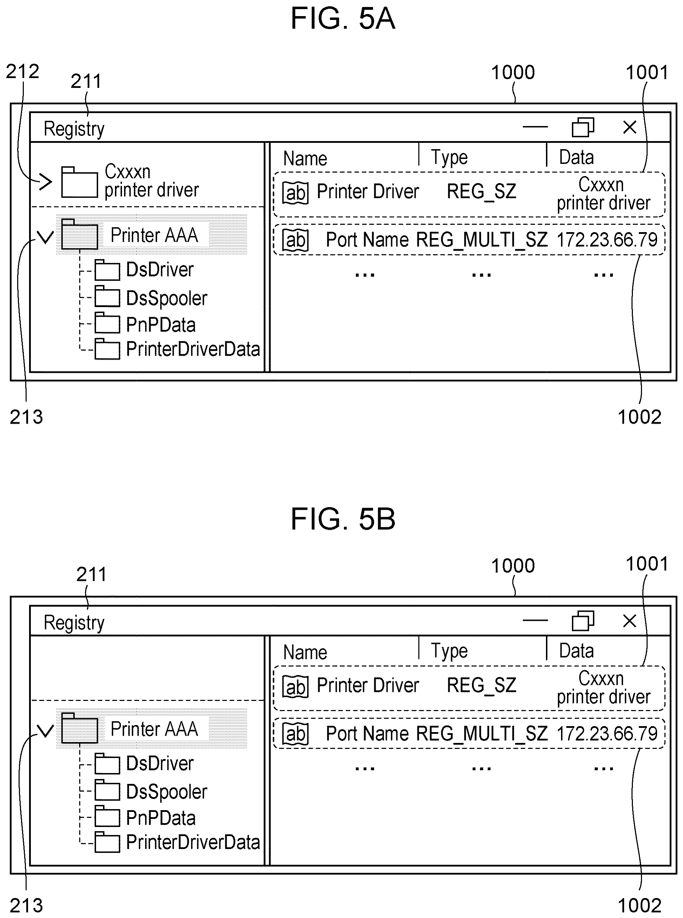

Fig. 5A illustrates a UI screen 1000 of a registry edit application in the case where a driver object 212 and a printer object 213 are registered in the registry 211. When a printer driver 214 is installed and a print queue of printer AAA of the image forming apparatus 101 is created, the driver object 212 of the printer driver 214 and the printer object 213 of printer AAA are stored in the registry 211.

Further, the printer object 213 stores identification information of the printer driver 214. Thus, the driver object 212 is associated with the printer object 213. In the present embodiment, it is assumed that the name of the printer driver 214 illustrated in information 1001 serves as identification information. Alternatively, another type of identification information may be used.

The printer object 213 stores the connection port name (172.23.66.79) of the printer illustrated in information 1002, enabling printing to the printer from the print queue corresponding to the printer object 213.

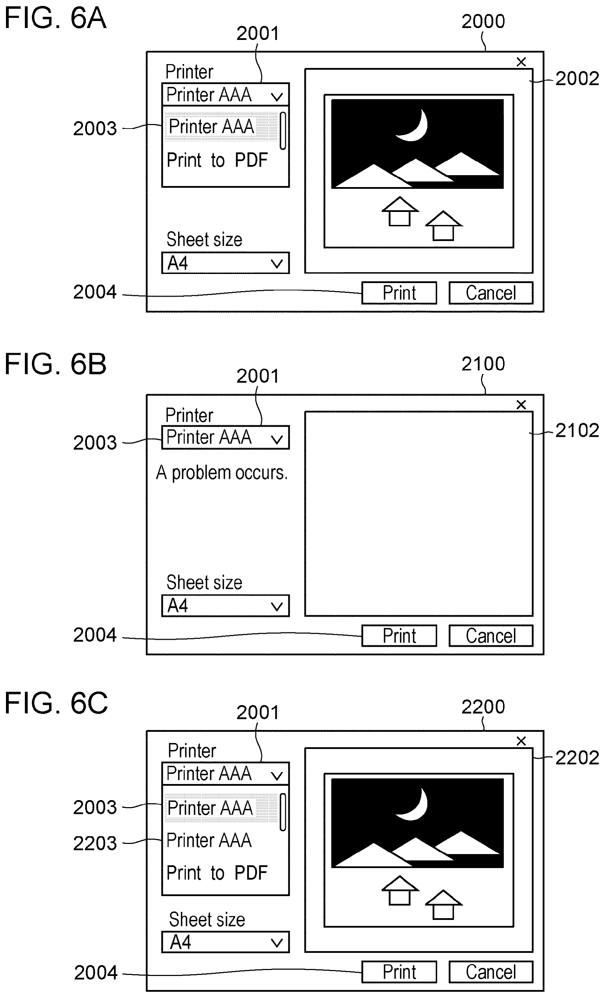

Fig. 6A is a diagram illustrating an example of a screen 2000 displayed on a print setting UI of the drawing application 216 in the case where, as illustrated in Fig. 5A, the driver object 212 associated with the printer object 213 is registered in the registry 211.

On the UI screen 2000, when a print queue 2003 of printer AAA is selected from a printer selection combo box 2001, a preview screen 2002 is displayed. Pressing a print execution button 2004 causes a print job to be transmitted to printer AAA of the image forming apparatus.

Fig. 5B illustrates an example of the case in which the driver object 212 is deleted, for example, due to a mechanism of blocking the function of a printer driver 214 made by the printer maker. Examples of a mechanism of blocking the function of a printer driver made by the printer maker include Windows Protected Print (WPP) mode of Windows^{®}. When the driver object 212 is deleted, the printer object 213 of printer AAA still exists with being associated with the driver object 212 of the printer driver 214 that is not present in the registry 211.

Fig. 6B is a diagram illustrating an example of a screen 2100 displayed on a print setting UI of the drawing application 216 in the case where, as illustrated in Fig. 5B, the driver object 212 associated with the printer object 213 is not registered in the registry 211.

Since the driver object 212 associated with the printer object 213 is not registered, the print queue 2003 of printer AAA fails to be used. For example, when, on the UI screen 2100, the print queue 2003 of printer AAA is selected from the printer selection combo box 2001, a preview screen 2102 is not displayed properly.

In addition, even when the print execution button 2004 is pressed, printing to printer AAA of the image forming apparatus fails to be performed.

In this case, to make the print queue usable again, the driver installer 218 needs to be used to install the printer driver 214 again. However, when the driver installer 218 is used to install the printer driver 214 again, a new print queue is created. Thus, multiple print queues of the same image forming apparatus are present.

Fig. 6C is a diagram illustrating an example of a screen 2200 displayed on a print setting UI of the drawing application 216 after reinstallation of the printer driver 214.

By installing the printer driver 214 again, a printer object 213 and a driver object 212 associated with the printer object 213 are registered. At that time, the additional printer object 213 having the same connection port destination, print setting information, and the like is stored in the registry 211. As a result, in the combo box 2001, a print queue 2203 of printer AAA, which is registered again when the printer driver 214 is reinstalled, is displayed in addition to the print queue 2003 of printer AAA which has been already registered.

Even when either one of the print queues 2003 and 2203 is selected, a print job may be transmitted to printer AAA. However, the same print queues are displayed, resulting in degradation of user operability.

### First Embodiment

In a first embodiment, a process in which the driver installer 218 makes a print queue of a printer, which is unusable due to deletion of the corresponding driver object 212, usable again without degradation of user operability will be described as an example.

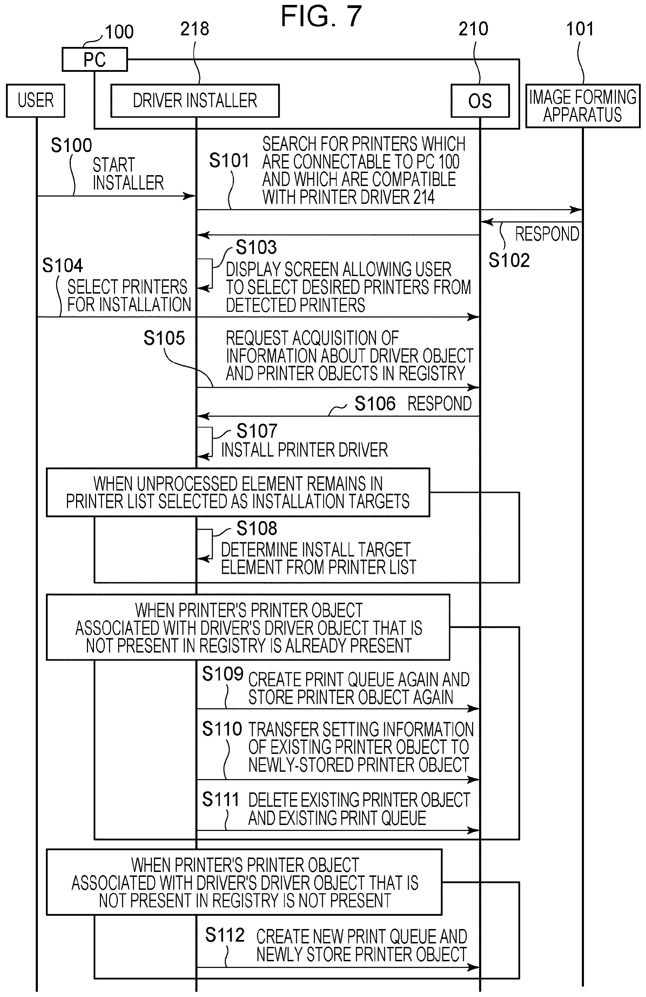

Fig. 7 is a diagram illustrating the sequence of the process of the present system according to the first embodiment.

In S100, a user transmits an instruction to start the driver installer 218.

In S101, the driver installer 218 communicates with the image forming apparatus 101 through the network 130 to search for printers which are connectable to the PC 100 and which are compatible with a printer driver 214. In S102, the image forming apparatus 101 responds to this. The response result in S102 is passed from the OS 210 to the driver installer 218. In the first embodiment, it is assumed that printers detected in the search are printers which are connectable to the PC 100 and which are compatible with the printer driver 214. Alternatively, printers made by the same printer maker may be detected.

In S103, on a UI of the driver installer 218, a screen, which allows the user to select desired printers from the printers detected in the search, is displayed.

In S104, the user transmits an instruction to select printers, on which installation is to be performed, from the screen displayed on the UI of the driver installer 218.

In S105, the driver installer 218 requests acquisition of information about the driver object 212 and the printer objects 213, which are stored in the registry 211 in the OS 210. In S105, the driver installer 218 requests acquisition of information about the driver object 212 and the printer objects 213 having setting information including the name of the driver that is to be installed by the installer.

The information about the driver object 212 and the printer objects 213 is, for example, information stored when a user uses the driver installer 218, for use of print queues, to install the printer driver 214.

In S106, the OS 210 responds to the driver installer 218's request for acquisition of the information about the driver object 212 and the printer objects 213. For example, when, after deletion of the driver object 212, the user is to install the printer driver 214 again by using the driver installer 218, the OS 210 returns, to the driver installer 218, only information about the printer objects 212.

In S107, the driver installer 218 installs the printer driver 214. In this step, the registry 211 stores the driver object 212 of the corresponding printer driver 214. However, in S106, when the same driver object 212 is already present, the printer driver 214 is not installed. The process in S107 allows the print queue, which has been unusable, to make usable again.

In S108, when an unprocessed element remains in the printer list selected as installation targets by the user, the driver installer 218 determines a printer, which is to be installed, from the printer list.

When the printer object 213 associated with the driver object 212 that is not present in the registry 211 is already present in S106, the following process is performed in S109. In S109, the driver installer 218 creates a print queue again, and stores, in the registry 211, a printer object 213 again. Whether a driver object 212 is associated with a printer object 213 is determined by the driver installer 218 on the basis of whether the printer object 213 has setting information including the name of the driver that is to be installed by the installer.

After that, in S110, the driver installer 218 transfers setting information of the existing printer object 213, which is present in S106, to the newly-stored printer object 213. Examples of the transferred information include setting information, such as setting of the connection port of the printer corresponding to the existing printer object 213 and the name of the driver associated with the print queue.

At that time, all of the setting information may be transferred by the driver installer 218, or only part of the setting information may be transferred. For example, the port information may be the setting at the time of storing the printer object 213 again, and the other print setting information and the like may be the transferred setting of the existing printer object 213 which is present at the time of the process in S106.

In S111, the driver installer 218 deletes the existing print queue and the existing printer object 213 which are present in the process in S106.

In S109, in response to the driver installer 218 creating a print queue again with a name different from that of the existing print queue, the registry 211 may store again the printer object 213 with the same name as that of the print queue which has been created again. After that, the driver installer 218 performs the processes in S110 and S111. After the process in S111, the name of the print queue may be changed to the existing name.

The driver installer 218 performs the processes in S109 to S111, preventing multiple print queues, which correspond to the same printer AAA and which have the same print setting information or the like, from being displayed.

When, in S106, the printer object 213 associated with the driver object 212 that is not present in the registry 211 is not present, the following process is performed in S112. In S112, the driver installer 218 creates a new print queue, and stores a new printer object 213.

The order of the processes in S109 to S111 performed by the driver installer 218 is not limited to this. For example, the driver installer 218 may temporarily store setting information, which is necessary for transfer of the printer object 213, in a storage device of the PC 100. Then, the driver installer 218 may delete the existing print queue, and may then create again a print queue to which the setting information is transferred.

The printer object 213 associated with the driver object 212 that is not present in the registry 211 in S106 is associated with the driver object 212 of the reinstalled printer driver 214 in S107. Therefore, the processes in S109 to S111 performed by the driver installer 218 may be optionally skipped.

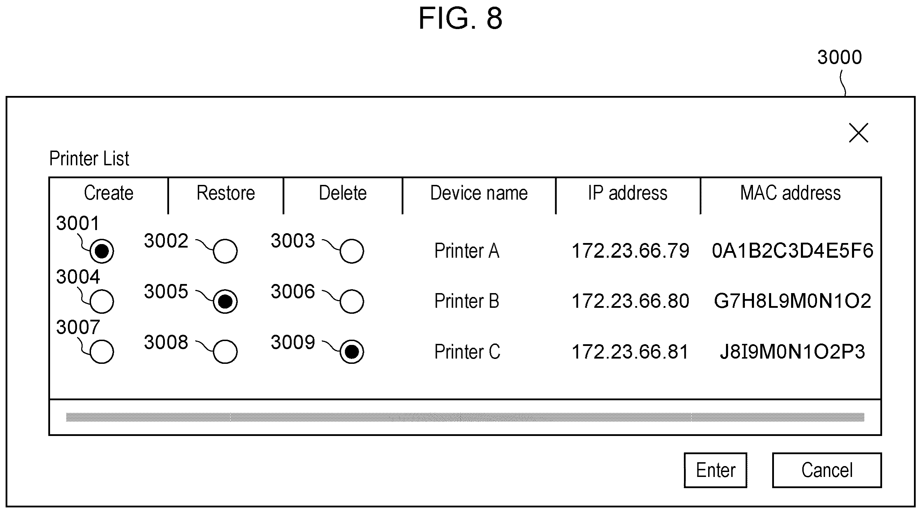

A user may select whether a print queue is to be created, restored, or deleted, from a selection UI such as a screen 3000 displayed on the UI illustrated in Fig. 8.

When a user selects "create", the process in S112 is performed. However, if the existing printer object 213 is present in the registry 211, a print queue is created again with a name different from that of the existing print queue. When the user selects "restore", if the existing printer object 213 is present in the registry 211, the processes in S109 to S111 are performed. If the existing printer object 213 is not present, the process in S112 is performed. When the user selects "delete", the processes in S109 to 112 are not performed, and the existing print queue is deleted.

At that time, it is assumed that only one of "create", "restore", and "delete" is allowed to be selected for each print queue.

For example, in the screen 3000 displayed on the UI in Fig. 8, 3001 is selected for the print queue of printer A; 3005, for the print queue of printer B; 3009, for the print queue of printer C. In this case, a new print queue of printer A is created; the print queue of printer B is restored; the print queue of printer C is deleted. Any combination of options of "create", "restore", and "delete" may be selected, and any one or two may be selected.

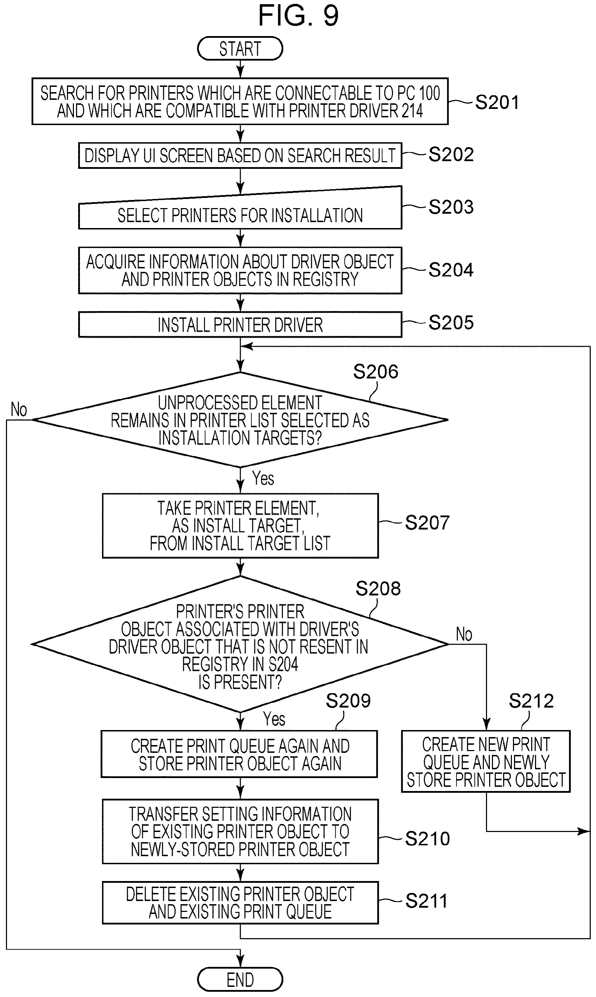

Fig. 9 is a flowchart of a process of the driver installer 218 according to the first embodiment. The process in Fig. 9 starts when the driver installer 218 receives a notification of a user's activation instruction.

In S201, the driver installer 218 communicates with the image forming apparatuses (101, 102) through the network 130, and searches for printers which are connectable to the PC 100 and which are compatible with a printer driver 214. S201 is an example of a printer search step.

In S202, as illustrated in Fig. 8, on a UI of the driver installer 218, a screen which allows a user to select desired printers from the printers detected in the search is displayed. S202 is an example of a selection screen display step.

In S203, the driver installer 218 detects the printers, which are selected by the user, as install targets.

In S204, the driver installer 218 acquires information about the driver object 212 and the printer objects 213 in the registry 211. S204 is an example of an acquisition request step.

In S205, the driver installer 218 installs the printer driver 214. In this step, the driver object 212 of the corresponding printer driver 214 is stored in the registry 211. The process in S205 is an example of a storing step, and the driver object stored in S205 is an example of a first driver object.

In S206, the driver installer 218 determines whether an unprocessed element remains in the printer list selected by the user as install targets.

If, in S206, an unprocessed element remains (Yes in S206), the process proceeds to S207. If an unprocessed element does not remain (No in S206). the process of the driver installer 218 ends.

In S207 corresponding to S108 in Fig. 7, the driver installer 218 takes an unprocessed printer element, as an install target, from the install target list.

In S208, the driver installer 218 checks if the printer object 213 of the printer associated with the driver object 212 of the driver that is not present in the registry 211 in S204 is present.

If the printer object 213 of the printer associated with the driver object 212 of the driver that is not present in the registry 211 is present (Yes in S208), the process proceeds to S209. If such a printer object 213 is not present (No in S208), the process proceeds to S212.

In S209 corresponding to S109 in Fig. 7, the driver installer 218 creates a new print queue, and newly stores, in the registry, a printer object 213 corresponding to the print queue. The process in S209 is an example of a storing step and a creating step. The printer object stored in S209 is an example of a first printer object, and the print queue created in S209 is an example of a first print queue. The processes in S208 and S209 translate to a process in which, when, in response to the acquisition request transmitted in S204, information about the driver object 212 fails to be acquired, a printer object 213 is stored and a print queue is created.

In S210 corresponding to S110 in Fig. 7, the driver installer 218 transfers setting information of the existing printer object 213 to the newly-stored printer object 213. The process in S210 is an example of a transfer step.

In S211 corresponding to S111 in Fig. 7, the driver installer 218 deletes the existing print queue and the existing printer object 213 which remain before reinstallation of the printer driver 214. The process in S211 is an example of a deleting step. The printer object deleted in S211 is an example of a second printer object, and the print queue deleted in S211 is an example of a second print queue.

In S212 corresponding to S112 in Fig. 7, the driver installer 218 creates a new print queue and a new printer object 213 corresponding to the print queue. S212 is an example of a printer object storing step.

The example, in which the driver installer 218 stores again, in the registry, the driver object 212, which has been deleted, of a printer driver 214 made by the printer maker, and makes the print queue, which has been unusable, usable again, is described above.

For example, in the case where, as in the case of WPP, a setting for preventing installation of a driver has been set, when an instruction to run an installer is transmitted, a notification that the setting hinders running of the installer, a notification that the setting needs to be changed, or the like may be transmitted.

### Second Embodiment

In the first embodiment, the process, in which the driver installer 218 stores again, in the registry, the driver object 212, which has been deleted, of a printer driver 214 made by the printer maker, and makes the print queue, which has been unusable, usable again, is described.

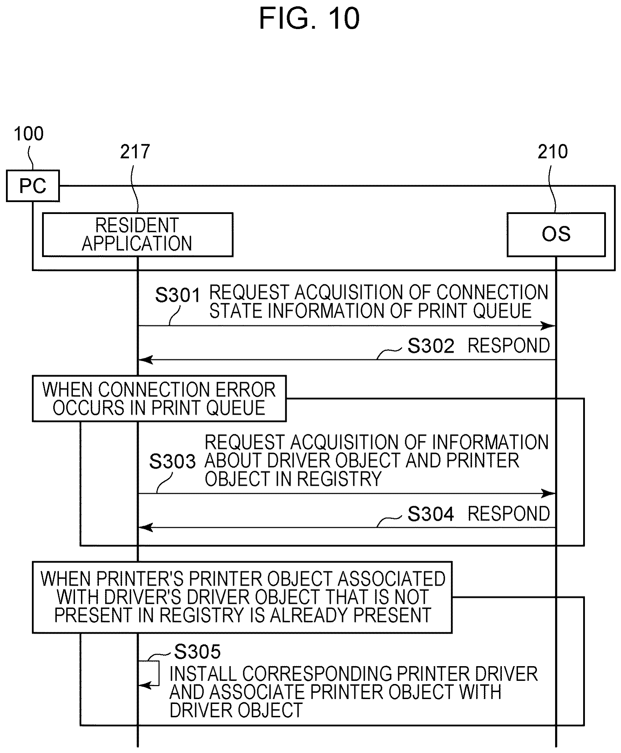

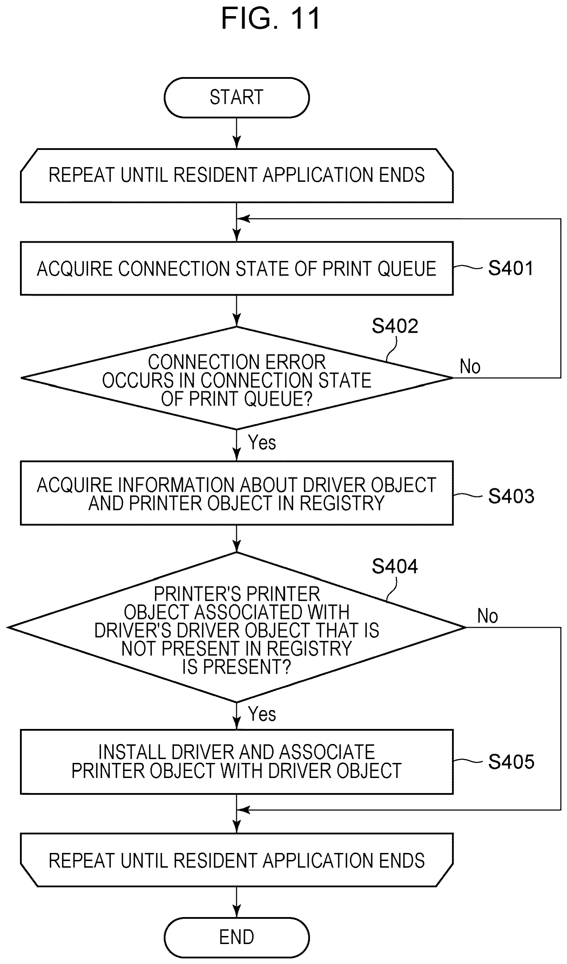

In a second embodiment, Figs. 10 and 11 are used to describe a process in which the resident application 217 determines occurrence of an error in the connection state of a print queue. In addition, the process, in which the print queue of a printer, which has been unusable due to deletion of the driver object 212 of the printer driver 214 made by the printer maker, is made usable again, will be described.

In the second embodiment, the resident application 217 uses package information of the printer driver 214, which is stored in the driver store, to install the printer driver 214, and stores the driver object 212 in the registry 211. Therefore, in the second embodiment, the driver installer 218 is not used. Thus, without creation of a new print queue, the print queue may be made usable again.

Fig. 10 is a diagram illustrating the sequence of the process of the present system according to the embodiment using the resident application 217.

In S301, the resident application 217 requests, from the OS 210, acquisition of connection state information of a print queue. In the second embodiment, it is assumed that acquisition of the connection state is detection of a connection error occurring when an instruction to transmit a print job from the print queue to printer AAA corresponding to the printer driver 214 is received. Alternatively, for example, it may be assumed that acquisition of the connection state is detection of a connection error occurring at another time, such as when a print queue is selected. In addition, occurrence of a connection error may trigger execution of S301, or S301 may be invoked at regular time intervals through polling.

In S302, the OS 210 returns, to the resident application 217, a response to the process in S301 performed by the resident application 217. In the process in S302, when a connection error occurs in the print queue, the following process is performed in S303.

In S303, the resident application 217 requests, from the OS 210, acquisition of information about the driver object 212 and the printer object 213 in the registry 211.

In S304, the OS 210 returns, to the resident application 217, a response to the process in S303 performed by the resident application 217. In the process in S304, when the printer object 213 associated with the driver object 212 that is not present in the registry 211 is present, the resident application 217 performs the following process in S305.

In S305, the resident application 217 specifies the storage destination of the package information of the printer driver 214 in the driver store based on the identification information, which is included in the printer object 213, of the printer driver 214. After the storage destination of the package information of the printer driver 214 is specified, the resident application 217 installs the printer driver 214 by using the package information of the printer driver 214. The package information used at that time is information which is disposed in the driver store and which is stored in a predetermined folder having the folder name corresponding to the driver.

In the process of installing the printer driver 214, the driver object 212 is registered in the registry 211 in the OS 210, and is associated with the corresponding printer object 213.

Fig. 11 is a flowchart of the process of the resident application 217 according to the second embodiment. The process in Fig. 11 starts when activation of the OS 210 or a user's operation causes the resident application 217 to start.

In S401, the resident application 217 acquires the connection state of a print queue from the OS 210.

In S402, the resident application 217 checks whether a connection error occurs in the connection state of the print queue acquired in S401. If a connection error occurs in the connection state of the print queue (Yes in S402), the process proceeds to S403. If a connection error does not occur in the connection state (No in S402), the process returns to S401. S401 and S402 are examples of a connection state acquisition step.

In S403, the resident application 217 acquires information about the driver object 212 and the printer object 213 in the registry 211 from the OS 210.

In S404, the resident application 217 checks whether the printer object 213 of the printer associated with the driver object 212 of the driver that is not present in the registry 211 is present. If the printer object 213 of the printer associated with the driver object 212 of the driver that is not present in the registry 211 is present (Yes in S404), the process proceeds to S405.

In S405, the resident application 217 installs the corresponding printer driver 214, and associates the driver object 212 with the printer object 213.

The processes from step S401 to step S405 are repeatedly performed while the resident application 217 is active.

In the second embodiment, the resident application 217 determines whether an error occurs in the connection state of a print queue. After that, the resident application 217 determines whether the printer object 213 associated with the driver object 212, which has been deleted, of the printer driver 214 made by the printer maker is present. Thus, the print queue of the printer, which has been unusable due to deletion of the driver object 212, may be made usable without degradation of user operability.

### Other Embodiments

Embodiments of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An application program for causing an information processing apparatus (100) to perform a control method, the program being configured to cause a printer driver (214) to be installed in the information processing apparatus (100), wherein the information processing apparatus (100) includes a registry (211) and a print queue, the registry (211) being configured to store a driver object (212) and a printer object (213), the driver object (212) including information about a printer driver (214), and the printer object (213) including identification information of the printer driver (214), and wherein the print queue corresponds to the printer object (213), the control method comprising:
requesting acquisition of information about the driver object (212) and the printer object (213) from the registry (211);
storing the driver object (212) corresponding to the printer driver (214), and, when information about the driver object (212) fails to be acquired in response to the acquisition request, storing, in the registry (211), a first printer object (213) including identification information of the printer driver (214), and creating a first print queue; and
when information about a second printer object (213) having the identification information of the printer driver (214) is acquired in response to the acquisition request, deleting the second printer object (213) and a second print queue corresponding to the second printer object (213).

2. The application program according to claim 1, wherein the driver object (212) includes information about a storage destination of the printer driver (214).

3. The application program according to claim 1 or claim 2, wherein the identification information of the printer driver (214) is a name of the printer driver (214).

4. The application program according to any one of claims 1 to 3, the control method further comprising:
causing the information processing apparatus (100) to perform transferring of setting information of the second printer object (213) to the first printer object (213).

5. The application program according to any one of the preceding claims, wherein
setting information of the second printer object (213) includes at least one of information about a connection port of a printer corresponding to the second printer object (213), a name of the printer driver (214), and print setting information.

6. The application program according to any one of the preceding claims, the control method further comprising:
causing the information processing apparatus (100) to acquire a connection state of the second print queue; and
when the connection state of the second print queue acquired in the acquiring a connection state indicates an error, causing the information processing apparatus (100) to perform the creating and the deleting.

7. The application program according to claim 6, wherein the acquiring of a connection state detects a connection error when an instruction to transmit a print job from the second print queue to a printer (101, 102) compatible with the printer driver (214) is received.

8. The application program according to claim 6 or claim 7, wherein the acquiring of a connection state acquires the connection state through polling at regular intervals.

9. The application program according to any one of the preceding claims, wherein the program is a driver installer (218) which installs the printer driver (214).

10. The application program according to any one of the preceding claims, wherein the program causes a storage destination of the printer driver (214) to be specified by using the identification information of the printer driver (214), and causes the printer driver (214) to be installed using the storage destination of the printer driver (214).

11. A method of an information processing apparatus (100) including a registry (211) and a print queue, the registry (211) being configured to store a driver object (212) and a printer object (213), the driver object (212) including information about a printer driver (214), the printer object (213) including identification information of the printer driver (214), and wherein the print queue corresponds to the printer object (213), the method comprising:
requesting acquisition of information about the driver object (212) and the printer object (213) from the registry (211);
storing the driver object (212) corresponding to a printer driver (214), and, when information about the driver object (212) fails to be acquired in response to the acquisition request, storing, in the registry (211), a first printer object (213) including identification information of the printer driver (214), and creating a first print queue; and
when information about a second printer object (213) having the identification information of the printer driver (214) is acquired in response to the acquisition request, deleting the second printer object (213) and a second print queue corresponding to the second printer object (213).

12. An information processing apparatus (100) including a registry (211) and a print queue, the registry (211) being configured to store a driver object (212) and a printer object (213), the driver object (212) including information about a printer driver (214), the printer object (213) including identification information of the printer driver (214), and wherein the print queue corresponds to the printer object (213), the information processing apparatus (100) comprising at least one processor operating to:
request acquisition of information about the driver object (212) and the printer object (213) from the registry (211);
store the driver object (212) corresponding to a printer driver (214), and, when information about the driver object (212) fails to be acquired in response to the acquisition request, store, in the registry (211), a first printer object (213) including identification information of the printer driver (214), and create a first print queue; and
when information about a second printer object (213) having the identification information of the printer driver (214) is acquired in response to the acquisition request, delete the second printer object (213) and a second print queue corresponding to the second printer object (213).
